# EUROPÄISCHE PATENTSCHRIFT

(11) **EP 3 655 221 B1**
(45) Veröffentlichungstag und Bekanntmachung des Hinweises auf die Patenterteilung: **01.06.2022**
(21) Anmeldenummer: 18742778.6
(22) Anmeldetag: 17.07.2018
(51) Int. Cl.: B29C 39/00, B29C 33/38, B29C 33/42, B29C 33/44, B29C 33/56, B29K 83/00

(54) **VERFAHREN ZUR HERSTELLUNG EINES WERKZEUGS FÜR EINE NEGATIVHAUT**
METHOD FOR PRODUCING A TOOL FOR A NEGATIVE SKIN
PROCÉDÉ DE FABRICATION D'UN OUTIL POUR UNE PEAU « FEMELLE »

(30) Priorität: 18.07.2017 DE 102017212240
(43) Veröffentlichungstag der Anmeldung: 27.05.2020
(73) Patentinhaber: FRIMO Group GmbH, 49504 Lotte (DE)
(72) Erfinder: MASSBAUM, Oliver, 49504 Lotte (DE); HUSTER, Hermann, 49504 Lotte (DE)
(74) Vertreter: Hoffmann Eitle
(86) Internationale Anmeldenummer: PCT/EP2018/069377
(87) Internationale Veröffentlichungsnummer: WO 2019/016202

(56) Entgegenhaltungen:
- EP-A1- 1 177 880
- EP-A1- 3 170 641
- DE-A1- 10 102 600
- DE-A1-102013 222 011

## Beschreibung

### Technisches Gebiet

Die vorliegende Erfindung betrifft ein Verfahren zur Herstellung eines Werkzeugs für eine Negativhaut. Das Verfahren kann beispielsweise im Bereich der Automobilindustrie zum Einsatz kommen.

Eine derartige Vorrichtung sowie ein derartiges Verfahren können beispielsweise beim Erzeugen von Negativhäuten aus Silikon eingesetzt werden, wobei die Negativhäute in einem nachfolgenden Verfahren zur Herstellung von Oberflächen, wie beispielsweise durch Lackauftrag erstellte Häute oder Polyurethan-Häute (PU-Häute), verwendet werden. Rein beispielhaft bilden solche Häute die Sichtseite von Armaturenbrettern, Türverkleidungen, Sitzen, Kopfstützen, Lenkräder oder ähnlichem.

### Stand der Technik

Das Erzeugen von Silikonhäuten ist ein gängiges Verfahren. Silikonhäute werden in einem Werkzeug als Negativ verwendet, um Oberflächen durch Lackauftrag oder Gießhäute aus Polyurethan oder einem Ähnlichen Material herzustellen. Diese Silikonhäute werden auch als Negativhäute bezeichnet.

Dabei stellt das Eingießen von Silikon zwischen zwei Formhälften einen Schritt zur Herstellung einer solchen

Silikonhaut dar. Beispielsweise zeigt die DE 101 36 391 A1 ein Verfahren zur Herstellung von genarbten Gießhäuten aus Polyurethan für Fahrzeuginnenverkleidungen, bei welchem Verfahren eine Negativhaut aus Silikon zum Einsatz kommt.

Neben einer qualitativ hochwertigen Verarbeitung steht in diesem Zusammenhang unter anderem auch die Thematik der Komplexität der Werkzeuge und somit den damit verbundenen Kosten im Fokus. Aufgrund von Hinterschneidungen in den zu formenden Geometrien müssen die benutzten einzelnen Formhälften im Stand der Technik mehrteilig ausgeführt sein, um das Entnehmen der Negativhäute nach dem Formen zu ermöglichen, oder die Form öffnen zu können.

Im Stand der Technik ist etwa auch die Verwendung von Losteilen wie Schiebern oder Klappen in solchen Formen vorgesehen. Diese können jedoch zum einen zu einem schlechteren optischen Gesamteindruck führen, gerade wenn diese Klappen auf Sichtoberflächen der zu erzeugenden Gießhäuten liegen, außerdem steigt die Komplexität der Formhälften stark an. Letzteres wirkt sich nachteilig auf die Kosten für ein solches Werkzeug aus.

Als weitere Schrift ist die DE 101 02 600 A1, die ein Verfahren zur Herstellung von genarbten, mit Polyurethan beschichteten Gießhäuten für Fahrzeuginnenverkleidungen betrifft. Das Verfahren umfasst die Schritte des Herstellens eines Belederungsmodells mit einer Kontur mit den bei der herzustellenden Innenverkleidung vorgesehenen Hinterschneidungen und Aufbringen einer genarbten Lederhaut sowie das Herstellen eines Silikonnegativs in einer Form mit den Hinterschneidungen, die durch das Belederungsmodell mit der genarbten Haut und einen teilbaren Stützkörper gebildet ist.

Die EP 3 170 641 A1 beschreibt eine Vorrichtung und ein Verfahren zum Herstellen einer Formhaut.

Ferner ist die EP 1 177 880 A1 bekannt.

### Gegenstand der Erfindung

Ausgehend vom Stand der Technik ist es eine Aufgabe der vorliegenden Erfindung, die im Stand der Technik bekannten Probleme zu verringern oder vollständig zu beheben, und ein vereinfachtes Verfahren zur Herstellung eines Werkzeugs für eine Negativhaut bereitzustellen zu können.

Der Gegenstand des Anspruchs 1 stellt ein Verfahren bereit, mit dem die zuvor genannten Ziele erreicht werden. Weitere bevorzugte Ausführungsformen sind in den abhängigen Ansprüchen aufgeführt.

Konkret stellt Anspruch 1 ein Verfahren zum Herstellen eines Werkzeuges für eine

Negativhaut bereit, insbesondere einer Negativhaut zur Fertigung einer Haut durch Lackauftrag, wobei das Verfahren nachfolgende Schritte aufweist.

Zunächst wird ein Positivkörper, bevorzugt mit einer Narbung, die insbesondere eine Ätznarbe, eine galvanisch erzeugte Narbe oder eine Lasernarbe ist, bereitgestellt, wobei eine erste Oberfläche des Positivkörpers eine Positivform einer herzustellenden Negativhaut ausbildet, und wobei die erste Oberfläche zumindest einen Hinterschnitt aufweist. Anschließend wird eine Wachsschicht auf der ersten Oberfläche des Positivkörpers aufgebracht und der zumindest eine Hinterschnitt mit der Wachsschicht ausgefüllt. Abschließend wird eine Werkzeugkavität auf die Wachsschicht aufgesetzt, und die Werkzeugkavität gegen die aufgebrachte Wachsschicht mit einer aufgebrachten Schicht beschichtet.

Mit diesem Verfahren ist es somit möglich, eine einteilige oder mehrteilige Werkzeugkavität zu verwenden, die mit der zuvor aufgebrachten Schicht als eine der Formhälften verwendet werden kann. Dies ist damit begründet, das die Werkzeugkavität im Gegensatz zu den Werkzeugkavitäten im Stand der Technik keine Hinterschneidungen aufweist, beziehungsweise eine verringerte Anzahl davon, wodurch ein Entfernen der Werkzeugkavität von dem Grundkörper in eine Richtung ohne Schwierigkeiten möglich ist. Die erzeugte Negativhaut weist somit an Stellen, an denen der Grundkörper Hinterschneidungen aufweist, Verdickungen auf.

Der vorliegenden Erfindung liegt u.a. die Erkenntnis zu Grunde, dass die Werkzeugkavität weniger komplex ausgestaltet sein könnte.

Basierend auf dieser Erkenntnis stellt die Erfindung ein Herstellungsverfahren bereit, das eine Negativhaut erzeugen kann, das Hinterschneidungen auf der Werkzeugkavität durch Verdickungen vermeidet.

Bevorzugt können Grundkörper und Werkzeugkavität temperiert sein. Somit kann eine Negativhaut während eines Eingießvorgangs auf einer konstanten Temperatur gehalten werden beziehungsweise ein bevorzugter Abkühlgradient genau eingehalten werden.

Das Verfahren zum Herstellen eines Werkzeugs für eine Negativhaut hat bevorzugt eine Wachsschicht mit einer Dicke in Bereichen, an denen keine Hinterschnitte ausgefüllt sind von 1 mm bis 2 mm, weiter bevorzugt etwa 1,5 mm. Dies ist eine bevorzugte Dicke der späteren Negativhaut in verschiedenen Anwendungen.

Bei dem offenbarten Verfahren kann die Schicht der Werkzeugkavität gegen die aufgebrachte Wachsschicht eine Dicke von 5 bis 15mm, bevorzugt 5 bis 12mm, weiter bevorzugt etwa 9 mm, aufweisen. Dieser Wert hat sich als besonders geeignet für das Eingießen herausgestellt und kann konstruktiv berücksichtigt werden.

Mit dem im vorigen offenbarten Verfahren kann ein erfindungsgemäßes Werkzeug hergestellt werden. Dieses Werkzeug weist einen Grundkörper auf, der eine Negativform für eine Oberfläche einer Negativhaut der zu erstellenden Gießhaut abbildet. Außerdem weist das Werkzeug eine Werkzeugkavität auf, die beschichtet und hinterschnittfrei ist, wobei die Schicht die andere Oberfläche der Negativhaut abbildet.

Dieses erfindungsgemäße Werkzeug ist in der Lage, Häute mit Hinterschnitten zu erzeugen, ohne dabei eine Werkzeugkavität mit Hinterschnitten zu haben. Dadurch kann die Werkzeugkavität einteilig ausgeführt sein, was eine Verringerung der Komplexität und damit dem Einsparen von Kosten als Folge hat.

Ferner können Werkzeugkavität und Grundkörper temperiert sein, um einen benötigten Temperaturgradienten beispielsweise für einen Abkühlvorgang der erzeugten Haut zu gewährleisten oder eine gleichbleibende Reaktionstemperatur zu ermöglichen.

Insbesondere weist der Grundkörper des Werkzeugs Hinterschnitte auf. Somit kann eine zu fertigende Haut beliebig komplexe Geometrien auf einer ihrer Oberseiten aufweisen und ist nicht beschränkt auf eine Geometrie ohne Hinterschnitte. Bevorzugt ist die Oberfläche der Haut, die auf dem Grundkörper ausgebildet wird, eine spätere Sichtoberfläche.

Weiter bevorzugt ist das Werkzeug in der Lage, eine Haut einer etwa konstanten Dicke herzustellen, mit Ausnahme der Regionen, an denen der Grundkörper Hinterschnitte abbildet. Somit kann ein besonders wertiger Eindruck der Haut erreicht werden und es kann zusätzlich Material eingespart werden.

### Kurze Beschreibung der Zeichnungen

- Fig. 1: zeigt eine schematische Querschnittsansicht eines ersten Verfahrensschrittes gemäß der vorliegenden Ausführungsform;
- Fig. 2: zeigt eine schematische Querschnittsansicht eines zweiten Verfahrensschrittes gemäß der vorliegenden Ausführungsform;
- Fig. 3: zeigt eine schematische Querschnittsansicht eines dritten Verfahrensschrittes gemäß der vorliegenden Ausführungsform;
- Fig. 4: zeigt einen weiteren Prozess mit der verwendeten Werkzeugkavität;
- Fig. 5: zeigt eine Gießhaut, die mit einem Gießhautwerkzeug gemäß der vorliegenden Ausführungsform erzeugt wurde.

### Detaillierte Beschreibung bevorzugter Ausführungsformen

Nachfolgend wird anhand der beigefügten Figuren eine bevorzugte Ausführungsform der vorliegenden Erfindung beschrieben. Weitere in diesem Zusammenhang genannte Modifikationen bestimmter Einzelmerkmale können jeweils einzeln miteinander kombiniert werden, um weitere Ausführungsformen auszubilden.

Die vorliegende Ausführungsform betrifft ein Verfahren zum Herstellen eines Werkzeugs für eine Negativhaut. Mit einem solchen Verfahren können Negativhäute 16 produziert werden. Der Term Negativhaut bezieht sich im Kontext der folgenden Beschreibung auf das so entstandene Zwischenprodukt, welches, wie oben dargestellt, in einem nachfolgenden Verfahren beispielsweise zu Herstellung Oberflächen durch Lackauftrag im Rahmen eines Schaumverfahrens oder zur Erstellung von beispielsweise PU-Häuten genutzt werden kann.

Derartige Negativhäute 16 können variable Dicken, Krümmungen und Dimensionen aufweisen und werden etwa in der Automobilindustrie im Bereich der Fertigung von beispielsweise Armaturenbrettern verwendet. Weitere Beispiele sind Türverkleidungen, Handschuhkastendeckel, Lenkräder oder ähnliches. Um einen besseren haptischen Eindruck zu verschaffen, kann eine mit dieser Negativhaut 16 gefertigte PU-Haut vor dem Montieren lackiert und unterschäumt werden. Allerdings werden die im Rahmen der vorliegenden Erfindung erstellten Negativhäute primär dazu eingesetzt, durch Lackauftrag auf die Negativhaut und nachfolgendes Hinterschäumen ein Bauteil mit einer entsprechenden Lackoberfläche zu erhalten.

Negativhäute 16 werden bevorzugt aus Silikonverbindungen hergestellt, allerdings ist die folgende Ausführungsform nicht darauf beschränkt.

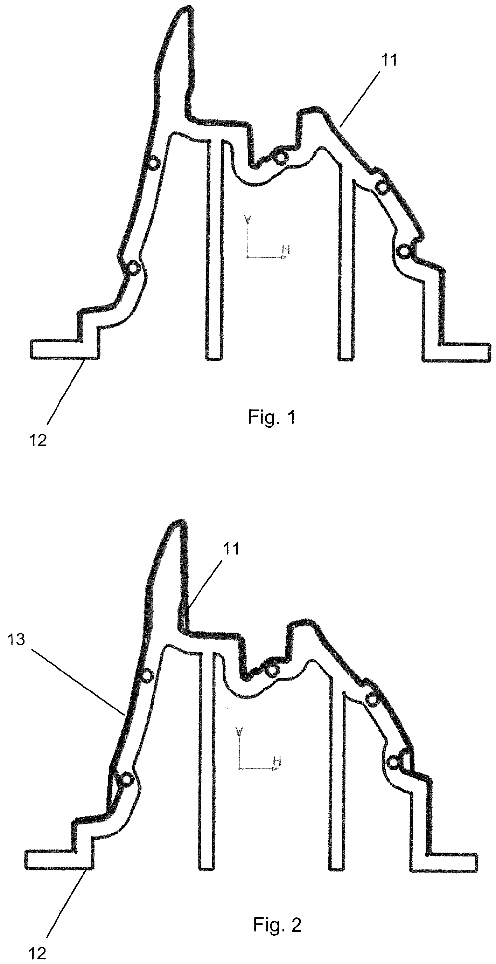

Fig. 1 zeigt eine schematische Querschnittsansicht eines ersten Verfahrensschrittes gemäß der vorliegenden Ausführungsform. Eine Galvanoschale 11 bildet dabei einen Positivkörper mit einer Oberfläche, die einer Positivoberfläche einer in einem weiteren Verfahren zu erzeugenden Haut entspricht. Die Positivoberfläche der Galvanoschale 11 weist Texturen auf, die auch die spätere Negativhaut 16 auszeichnen soll, so etwa eine Ledernarbe oder Strukturen für eine bessere Greifbarkeit, ein besseres haptisches Erlebnis oder imprägnierte Markennamen oder Sicherheitshinweise. Die Galvanoschale 11 weist in der vorliegenden Ausführungsform eine Dicke im Bereich von 3-5mm, bevorzugt etwa 4mm auf.

Diese Galvanoschale 11 wird auf einem festen Grundkörper 12 montiert, wobei die Positivoberfläche der Galvanoschale vom Grundkörper weg weist. Der Grundkörper 12 kann temperiert werden. Dies kann durch eine Flüssigkeitskühlung geschehen, die durch den Grundkörper 12 verläuft oder durch einzelne Heiz- bzw. Kühlelemente, die an verschiedenen Stellen des Grundkörpers 12 angeordnet sind. Bevorzugt kann die Temperatur des Grundkörpers 12 derart gesteuert werden, dass eine gewünschte Abkühlungskurve eines verwendeten Materials für die Negtivhaut 16 genau erreicht wird. Die Regelung kann weiter bevorzugt auch adaptiv ausgeführt sein um sich besser auf große Temperaturgradienten einzustellen. Die Temperierung des Grundkörpers 12 und dessen Temperaturregelung ist nicht in Fig. 1 bis 5 dargestellt.

In dem ersten Verfahrensschritt der bevorzugten Ausführungsform wird nun die Galvanoschale 11 auf dem Grundkörper 12 montiert.

Fig. 2 zeigt einen nächsten anschließenden Schritt. Hierbei wird auf die Galvanoschale 11 eine Wachsschicht 13 aufgebracht. Die Dicke der Wachsschicht 13 entspricht dabei im Wesentlichen der Dicke der späteren Negativhaut 16. Diese Dicke kann bevorzugt in einem Bereich zwischen 1 mm und 2 mm liegen, etwa bei 1,5 mm, was sich in der Automobiltechnologie für Negativhäute 16 aus Silikon als ein guter Wert herausgestellt hat. Andere Anwendungen oder verwendete Materialien können andere Dicken bedingen.

Zusätzlich werden in diesem Aufbringungsschritt des Wachses auch die vorgesehenen Hinterschnitte aufgefüllt. Dies kann geschehen, nachdem eine gleichmäßige Wachsschicht 13 wie oben beschrieben aufgebracht wurde oder gleichzeitig damit. Die so erhaltene Wachsschicht 13 stellt im Wesentlichen die gleiche Geometrie dar, die eine später durch das Werkzeug produzierte Negativhaut 16 hat.

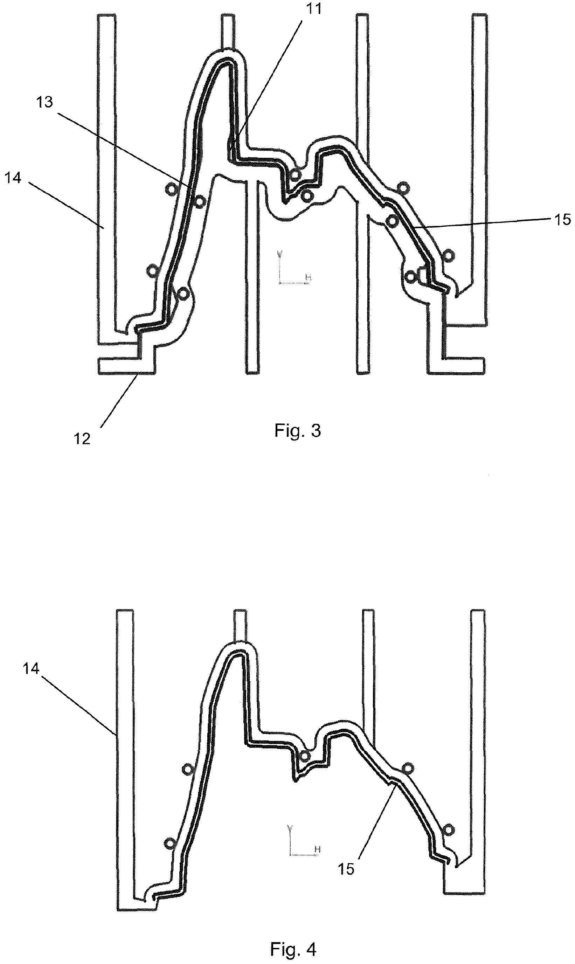

Fig. 3 zeigt einen folgenden Schritt. Hierbei wird zuerst eine Werkzeugkavität 14 an die zuvor erzeugte Kombination von Galvanoschale 11, Grundkörper 12 und Wachsschicht 13 verfahren. Die Werkzeugkavität 4 weist keine Hinterschnitte auf.

Die Werkzeugkavität 14 kann dabei bevorzugt, wie der Grundkörper 12 auch, temperiert sein und dessen Temperatur kann weiter bevorzugt geregelt sein.

Zwischen einer Oberfläche der Werkzeugkavität 14, die gegenüber der Negativoberfläche des Grundkörpers 12 liegt, und der Oberfläche der zuvor erzeugten Wachsoberfläche befindet sich nach dem Verfahren der Werkzeugkavität 14 eine Lücke. Diese Lücke wird nun in diesem dritten Verfahrensschritt mit einer Schicht 15 beschichtet.

Diese durch die im vorigen definierten beiden Oberflächen begrenzte Schicht 15 kann bevorzugt eine Dicke von etwa 9 mm aufweisen. Unregelmäßigkeiten der Geometrie Werkzeugkavität können durch ein Verändern der Dicke der Schicht 15 zwar korrigiert werden, jedoch ist es bevorzugt, dass die Dicke der Schicht 15 nicht zu sehr schwankt um einen ungleichmäßigen Temperaturgradienten zu vermeiden.

Eine Oberfläche der Schicht 15 ist somit in Verbindung mit der einen Oberfläche der Wachsschicht 13. Da diese eine Oberfläche der Wachsschicht 13 wie oben beschrieben eine Positivoberfläche der zu erzeugenden Negativhaut 16 ist, so ist die Oberfläche der Schicht 15 eine Negativoberfläche davon.

Das nach diesen Schritten erzeugte Werkzeug zum Herstellen einer Negativhaut 16 definiert die Negativhaut 16 somit geometrisch durch eine Oberfläche der Galvanoschale 11 und eine Oberfläche der Schicht 15 der Werkzeugkavität 14.

Vor dem Benutzen des Werkzeugs kann bei diesem noch die Wachschicht mit Galvanoschale 11 entfernt werden.

Fig. 4 zeigt eine resultierende Werkzeugkavität 14 mit aufgebrachter Schicht 15. Diese Werkzeugkavität 14 kann in weiteren Prozessen als Stützschale für die Negativhaut 16 verwendet werden, da sie hinterschnittfrei ist.

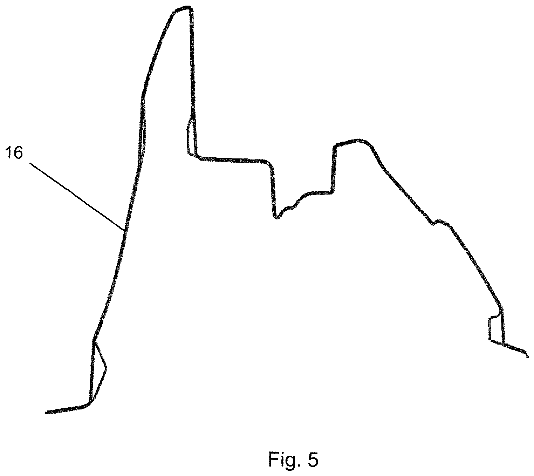

Ein durch ein diese Verfahren hergestelltes Werkzeug ist nun in der Lage, Negativhäute 16 zu produzieren wie etwa in Fig. 5 dargestellt. Diese Negativhäute 16 weisen an einer Oberfläche davon Verdickungen auf, um ein hinterschnittfreies Werkzeug zu ermöglichen oder ein Werkzeug mit reduzierten Hinterschnitten.

### Liste der Bezugszeichen

- 11: Galvanoschale (Positivkörper)
- 12: Grundkörper
- 13: Wachsschicht
- 14: Werkzeugkavität
- 15: Schicht
- 16: Negativhaut

## Patentansprüche

1. Verfahren zum Herstellen eines Werkzeugs für eine Negativhaut, wobei das Verfahren die folgenden Schritte aufweist:
Bereitstellen eines Positivkörpers (11), wobei eine erste Oberfläche des Positivkörpers (11) eine Positivform einer herzustellenden Negativhaut (16) ausbildet, wobei die erste Oberfläche zumindest einen Hinterschnitt aufweist,
Aufbringen einer Wachsschicht (13) auf der ersten Oberfläche des Positivkörpers (11) und Ausfüllen des zumindest einen Hinterschnitts mit der Wachsschicht (13),
Aufsetzen einer Werkzeugkavität (14) auf den Positivkörper (11), und
Beschichten der Werkzeugkavität (14) gegen die aufgebrachte Wachsschicht (13) mit einer Schicht (15).

2. Verfahren gemäß Anspruch 1, wobei der Positivkörper (11) mittels eines Grundkörpers (12) gehalten wird, wobei bevorzugt ist, dass der Grundkörper (12) temperiert ist.

3. Verfahren gemäß einem der vorangegangenen Ansprüche, **dadurch gekennzeichnet, dass** die Werkzeugkavität (14) temperiert ist.

4. Verfahren gemäß einem der vorangegangenen Ansprüche, **dadurch gekennzeichnet, dass** die Wachsschicht (13) an Bereichen, an denen keine Hinterschnitte ausgefüllt sind, eine Dicke von 1 bis 2 mm, bevorzugt etwa 1,5 mm, aufweist.

5. Verfahren gemäß einem der vorangegangenen Ansprüche, wobei die Schicht (15) der Werkzeugkavität (14) eine Dicke in einem Bereich von 5 mm bis 15 mm, bevorzugt 5 bis 12mm, weiter bevorzugt von etwa 9 mm, aufweist.

6. Verfahren gemäß einem der vorangegangenen Ansprüche, **dadurch gekennzeichnet, dass** der Positivkörper (11) eine Galvanoschale ist.

7. Verfahren gemäß einem der vorangegangenen Ansprüche, **dadurch gekennzeichnet, dass** die erste Oberfläche des Positivkörpers (11) eine genarbte Oberfläche, insbesondere eine Ätznarbe oder eine Lasernarbe ist.

8. Verfahren gemäß einem der vorangegangenen Ansprüche, **dadurch gekennzeichnet, dass** die Negativhaut (16) eine Silikonhaut ist.

## Claims

1. Method for producing a tool for a negative skin, the method comprising the following steps:
providing a positive body (11), wherein a first surface of the positive body (11) forms a positive mould of a negative skin (16) which is to be produced, wherein the first surface has at least one undercut,
applying a wax layer (13) to the first surface of the positive body (11) and filling in at least one undercut with the wax layer (13),
placing a tool cavity (14) on the positive body (11), and
coating the tool cavity (14) with a layer (15) against the applied wax layer (13).

2. Method according to claim 1, wherein the positive body (11) is held by means of a base body (12), wherein it is preferred that the base body (12) is tempered.

3. Method according to one of the preceding claims, **characterised in that** the tool cavity (14) is tempered.

4. Method according to one of the preceding claims, **characterised in that** the wax layer (13) has a thickness of 1 to 2 mm, preferably around 1.5 mm, on regions where no undercuts are filled.

5. Method according to one of the preceding claims, wherein the layer (15) of the tool cavity (14) has a thickness in a range of 5 mm to 15 mm, preferably 5 to 12 mm, more preferably of about 9 mm.

6. Method according to one of the preceding claims, **characterised in that** the positive body (11) is a galvanic mould shell.

7. Method according to one of the preceding claims, **characterised in that** the first surface of the positive body (11) is a grained surface, in particular an etched or laser-textured surface.

8. Method according to one of the preceding claims, **characterised in that** the negative skin (16) is a silicone skin.

## Revendications

1. Procédé de fabrication d'un outil pour une peau négative, dans lequel le procédé comprenant les étapes consistant à :
fournir un corps positif (11), dans lequel une première surface du corps positif (11) forme un moule positif d'une peau négative (16) à produire, dans lequel la première surface présente au moins une contre-dépouille,
appliquer une couche de cire (13) sur la première surface du corps positif (11) et remplir la au moins une contre-dépouille avec la couche de cire (13),
placer une cavité d'outil (14) sur le corps positif (11), et
recouvrir la cavité d'outil (14) contre la couche de cire appliquée (13) d'une couche (15).

2. Procédé selon la revendication 1, dans lequel le corps positif (11) est maintenu au moyen d'un corps de base (12), dans lequel le corps de base (12) est de préférence régulé en température.

3. Procédé selon l'une des revendications précédentes, **caractérisé en ce que** la cavité de moule (14) est régulée en température.

4. Procédé selon l'une des revendications précédentes, **caractérisé en ce que** la couche de cire (13) présente une épaisseur de 1 à 2 mm, de préférence d'environ 1,5 mm, dans des zones où aucune contre-dépouille n'est remplie.

5. Procédé selon l'une des revendications précédentes, dans lequel la couche (15) de la cavité d'outil (14) présente une épaisseur dans une plage de 5 mm à 15 mm, de préférence de 5 à 12 mm, plus préférentiellement d'environ 9 mm.

6. Procédé selon l'une des revendications précédentes, **caractérisé en ce que** le corps positif (11) est une coque électroformée.

7. Procédé selon l'une des revendications précédentes, **caractérisé en ce que** la première surface du corps positif (11) est une surface grainée, notamment une cicatrice de gravure ou une cicatrice laser.

8. Procédé selon l'une des revendications précédentes, **caractérisé en ce que** la peau négative (16) est une peau en silicone.
